(19) Europäisches Patentamt
European Patent Office
Office européen des brevets

(11) **EP 2 502 296 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **10784263.5**

(22) Anmeldetag: **17.11.2010**

(51) Int Cl.:
*H01M 8/1213* (2016.01)    *H01M 8/1246* (2016.01)
*H01M 8/126* (2016.01)    *H01M 4/86* (2006.01)
*H01M 8/1253* (2016.01)    *H01M 4/88* (2006.01)
*H01M 4/90* (2006.01)

(86) Internationale Anmeldenummer:
**PCT/EP2010/007002**

(87) Internationale Veröffentlichungsnummer:
**WO 2011/060928 (26.05.2011 Gazette 2011/21)**

(54) **ANORDNUNG FÜR EINE BRENNSTOFFZELLE SOWIE VERFAHREN ZU DEREN HERSTELLUNG**

ASSEMBLY FOR A FUEL CELL AND METHOD FOR PRODUCING SAME

AGENCEMENT POUR UNE CELLULA À COMBUSTIBLE AINSI QUE SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2009 EP 09014400**

(43) Veröffentlichungstag der Anmeldung:
**26.09.2012 Patentblatt 2012/39**

(73) Patentinhaber: **Forschungszentrum Jülich GmbH**
**52425 Jülich (DE)**

(72) Erfinder:
• **RÜTTINGER, Matthias**
**A-6600 Reutte (AT)**
• **BRANDNER, Marco**
**87466 Oy-Mittelberg (DE)**
• **FRANCO, Thomas**
**87435 Kempten-Allgäu (DE)**
• **VENSKUTONIS, Andreas**
**A-6600 Reutte (AT)**
• **MÜCKE, Robert**
**52428 Jülich (DE)**
• **BUCHKREMER, Hans Peter**
**52525 Heinsberg (DE)**

(56) Entgegenhaltungen:
WO-A1-2008/003113    WO-A1-2009/105886
DE-A1- 19 626 342    DE-A1- 19 819 453
US-A1- 2003 157 386

• LIU M ET AL: "YSZ-based SOFC with modified electrode/electrolyte interfaces for operating at temperature lower than 650<o>C", JOURNAL OF POWER SOURCES, ELSEVIER SA, CH LNKD-DOI:10.1016/J.JPOWSOUR.2008.01.066, Bd. 180, Nr. 1, 15. Mai 2008 (2008-05-15), Seiten 215-220, XP022612340, ISSN: 0378-7753 [gefunden am 2008-02-07]
• FONTAINE M L ET AL: "Composition and porosity graded La2-xNiO4+delta (x>=0) interlayers for SOFC: Control of the microstructure via a sol-gel process", JOURNAL OF POWER SOURCES, ELSEVIER SA, CH LNKD-DOI:10.1016/J.JPOWSOUR.2005.08.016, Bd. 156, Nr. 1, 19. Mai 2006 (2006-05-19), Seiten 33-38, XP025083900, ISSN: 0378-7753 [gefunden am 2006-05-19]

**Beschreibung**

Die Erfindung betrifft eine Anordnung für eine Brennstoffzelle, mit einer Elektrode und einem Elektrolyt sowie ein Verfahren zur Herstellung der Anordnung.

Bei der Herstellung von Hochtemperatur-Brennstoffzellen wird üblicherweise ein Substrat verwendet, auf dem ein Elektrolyt und die beiden Elektroden (Kathode und Anode) aufgebracht sind. Beispielsweise werden auf das Substrat zunächst die Anode, danach der Elektrolyt und schließlich die Kathode aufgebracht. Diese schichtartig aufgebrachten Bestandteile der Brennstoffzelle sind elektrochemisch aktive Zellschichten und werden auch als Kathoden-Elektrolyt-Anoden-Einheit (KEA-Einheit) bezeichnet, wie dies z.B. aus DE 103 43 652 A1 bekannt ist. Das Substrat wirkt als mechanischer Träger für die KEA-Einheit und ist z.B. keramisch oder metallisch ausgebildet.

In DE 103 43 652 A1 ist ein metallisches Substrat vorgesehen, z.B. ein aus gesinterten oder gepressten Metallpartikeln bestehender poröser Körper. Metallische Substrate haben den Vorteil, dass sie eine gute thermische Anpassung an einen sogenannten Interkonnektor und eine technisch einfache elektrische Kontaktierung mit diesem Interkonnektor ermöglichen. Der Interkonnektor - auch als bipolare Platte oder Stromsammler bezeichnet - ist zwischen zwei Brennstoffzellen angeordnet und verbindet die einzelnen Brennstoffzellen elektrisch in Serie. Außerdem stützen die Interkonnektoren die Brennstoffzellen mechanisch und sorgen für eine Trennung und Führung der Reaktionsgase auf der Anoden- und Kathodenseite.

Zwischen der Anode und der Kathode ist der Elektrolyt angeordnet. Der Elektrolyt muss mehrere Anforderungen erfüllen. Er muss Sauerstoffionen leiten und gleichzeitig für Elektronen isolierend sein. Außerdem muss der Elektrolyt gasdicht sein. Darüber hinaus muss eine unerwünschte chemische Reaktion zwischen dem Elektrolyt und einer angrenzenden Elektrode vermieden werden. Um diesen Anforderungen gerecht zu werden, ist in DE 10 2007 015 358 A1 ein mehrschichtiger Aufbau eines Elektrolyts aus mindestens drei Schichten vorgesehen.

Aus DE 196 26 342 A1 ist ein Verfahren zur Herstellung einer dünnen Elektrolytschicht auf einer porösen Elektrode bekannt, bei dem zunächst eine Suspension umfassend Elektrodenmaterial auf eine Elektrode gegossen und getrocknet wird (Elektrodenzwischenschicht), wobei die Größe der Feststoffanteile dieser Suspension derart gewählt wird, dass nach dem Trocknen die Elektrodenzwischenschicht eine mittlere Porengröße aufweist, die kleiner ist, als die mittlere Porengröße der Elektrodenschicht. Anschließend wird eine weitere Suspension umfassend Elektrolytmaterial auf diese Elektrodenzwischenschicht gegossen und getrocknet.

Der Erfindung liegt die Aufgabe zugrunde, eine Anordnung bereitzustellen, die den Aufbau einer Brennstoffzelle vereinfacht. Weiterhin liegt der Erfindung die Aufgabe zugrunde, ein Verfahren zur Herstellung einer solchen Anordnung bereitzustellen.

Diese Aufgabe wird durch eine Anordnung mit der Merkmalskombination des Anspruches 1 sowie durch ein Verfahren zur Herstellung der Anordnung mit der Merkmalskombination des Anspruches 13 gelöst. Erfindungsgemäß ist in der Anordnung zwischen einer Elektrode und dem Elektrolyt eine Adaptionsschicht vorgesehen. Diese Adaptionsschicht bewirkt eine gute Anbindung bzw. Adaption des Elektrolyts an die Elektrode. Weiterhin unterstützt sie einen flachen Aufbau der Anordnung bzw. der Brennstoffzelle, wenn ein metallisches poröses Trägersubstrat für die Elektroden und den Elektrolyt bereitgestellt wird.

Einerseits sind metallische poröse Trägersubstrate im Vergleich zu keramischen Trägersubstraten mechanisch stabiler und können mit einer besonders geringen Substratdicke bereitgestellt werden. Andererseits soll der gasdichte Elektrolyt möglichst dünn ausgebildet sein. Dies setzt eine möglichst kleine Rauhigkeit an der dem Elektrolyt zugeordneten Elektroden-Oberfläche (z.B. Anoden-Oberfläche) voraus. Entsprechend muss das Elektroden-Material derart auf das Trägersubstrat aufgebracht werden, dass diese gewünschte geringe Oberflächen-Rauhigkeit an der Elektrode erzielt wird. Dem steht die verhältnismäßig große Oberflächen-Rauhigkeit des metallischen porösen Trägersubstrates entgegen. Das Erzielen der gewünschten geringen Oberflächen-Rauhigkeit an der Elektrode wird noch zusätzlich erschwert, wenn die Elektrode (insbesondere als Anode) bei reduzierten Prozessbedingungen mittels Sintern auf dem Trägersubstrat hergestellt wird, weil hierdurch eine vergröberte Rauhigkeit an der Elektroden-Oberfläche entsteht. Diese Probleme werden erfindungsgemäß gelöst, indem die mittlere Porengröße der Adaptionsschicht kleiner ist als die mittlere Porengröße der Elektrode. Dieses Verhältnis der mittleren Porengrößen gilt zumindest für die oberflächennahen Schichtbereiche der dem Elektrolyt zugewandten Oberflächen von Elektrodenschicht und Adaptionsschicht. Vorzugsweise gilt dieses Verhältnis für die gesamte Schichtdicke von Elektrode und Adaptionsschicht. Mit Hilfe des vorgenannten Verhältnisses der mittleren Porengröße wird in der Anordnung eine Oberflächenstruktur zur Verfügung gestellt, die das Aufbringen eines gasdichten Dünnschichtelektrolyten technisch vereinfacht. Insbesondere ist es mittels der Adaptionsschicht möglich, besonders dünne Elektrolyt-Schichten (< 10 $\mu$m) - beispielsweise mittels physikalischer Gasphasenabscheidung (PVD = physical vapour deposition), hierbei insbesondere über Elektronenstrahlverdampfen bzw. Sputter-Prozesse, oder Sol-Gel-Verfahren - gasdicht aufzubringen. Abhängig vom Material der Adaptionsschicht ist deshalb eine einzige dünne Elektrolytschicht für die ordnungsgemäße Funktionsweise der Brennstoffzelle ausreichend, was die Herstellung der Brennstoffzelle vereinfacht. Zudem wird der innere Zellwiderstand der Brennstoffzelle im Vergleich zu Brennstoffzellen mit plasmagespritzten Elektrolyten, die für eine ausreichende Gasdichtheit eine Schichtdicke von ca. 40 μm benötigen, signifikant reduziert, wodurch höhere Leistungsausbeuten erzielt werden können.

Die Adaptionsschicht kann hinsichtlich Material und Struktur, insbesondere Porenstruktur, derart ausgewählt werden, dass ein Elektrolyt unter Zwischenlage der Adaptionsschicht immer auf eine Elektrode (Anode oder Kathode) aufgebracht werden kann.

Die Adaptionsschicht wird erfindungsgemäß bei reduzierten Anodenschichtstrukturen eingesetzt, auf denen ein direktes Aufbringen einer gasdichten Elektrolyt-Schicht nicht möglich ist. Derartige reduzierte Anodenschichtstrukturen ergeben sich z.B. im Zusammenhang mit metallischen Substraten. Diese Substrate werden vorzugsweise pulvermetallurgisch hergestellt und dabei insbesondere plattenartig bereitgestellt. Ein zentraler Bereich dieses Substrates ist porös und dient als mechanischer Träger für die elektrochemisch aktiven Zellschichten. Diese Zellschichten können z.B. durch nasschemische Beschichtung (wie Siebdruck oder Nasspulverspritzen) mit anschließender Sinterung oder durch thermische Spritzverfahren (wie Plasmaspritzen oder Hochgeschwindigkeitsflammspritzen) hergestellt werden. Metallische Trägersubstrate haben gegenüber keramischen Trägersubstraten den Vorteil, dass sie thermisch belastbarer und während des Betriebes redox-stabiler sind. Allerdings muss eine Oxidation des Trägersubstrates während der Herstellung verhindert werden, da eine Bildung von Metalloxid Volumenänderungen im Trägersubstrat bewirken würde, die ein defektfreies Aufbringen der Elektroden und des Elektrolyt auf das Trägersubstrat gefährden würde. Außerdem erhöht sich bei dem oxidierenden Trägersubstrat dessen elektrischer Widerstand, was sich nachteilig auf die spätere Zellleistung auswirken würde. Deshalb wird eine Sinterung der auf das Trägersubstrat aufgebrachten Anodenstruktur in reduzierter Atmosphäre durchgeführt, so dass die Anodenstruktur in reduzierter, poröser Form vorliegt. Das vor der Sinterung in der Anodenstruktur enthaltene Nickeloxid wird während der Sinterung reduziert, was aufgrund der hohen Sinteraktivität zu einer Vergröberung ihrer Korngröße führt, und es entstehen Poren mit verhältnismäßig großen Durchmessern (z.B. 2 μm). Eine derartige Oberflächenstruktur der Anode ist oftmals nicht dazu geeignet, einen gasdichten Dünnschichtelektrolyten direkt auf die Anodenstruktur aufzubringen. Insbesondere ist die gewünschte Gasdichtheit des Elektrolyt nicht gewährleistet, wenn er mittels Gasphasenabscheidung (z.B. PVD-Verfahren) auf die Anodenstruktur aufgebracht werden soll. Dieses Problem wird mittels der oben beschriebenen Adaptionsschicht gelöst.

Zur physikalischen Charakterisierung einer Oberfläche kann die Rauhigkeit herangezogen werden. Das Primärprofil wurde optisch vermessen (konfokaler Lasertopograph) und das gefilterte Rauheitsprofil und die Rauwerte gemäß DIN EN ISO 11562 und 4287 berechnet. Die Längen der Taststrecke ($l_t$), Messstrecken ($l_n$) und- Einzelmessstrecken ($l_r$) wurden gemäß DIN EN ISO 4288 gewählt. Nach DIN EN ISO 4287 gibt der arithmetische Mittenrauwert $R_a$ den arithmetischen Mittelwert der Beträge aller Profilwerte eines Rauheitsprofils an. Der quadratische Mittenrauwert $R_q$ (auch als mittlere Oberflächenrauhigkeit $R_q$ bezeichnet) ist der quadratische Mittelwert aller Profilwerte und wichtet Ausreißer stärker als der arithmetische Mittenrauwert $R_a$. Die gemittelte Rautiefe $R_z$ ist gemäß DIN EN ISO 4287 als das arithmetische Mittel der Einzelrautiefen aller Einzelmessstrecken definiert. Eine Einzelrautiefe bedeutet dabei den Abstand zwischen der höchsten Spitze und der tiefsten Riefe in einer Einzelmessstrecke. Die gesamte Messstrecke wird dabei in 5 gleichgroße, aufeinanderfolgende Segmente (Einzelmessstrecken) unterteilt. Da der $R_z$-Wert von den tiefsten Tälern und höchsten Spitzen bestimmt wird, ist dieser besonders von dem verwendeten Messverfahren abhängig. Im Gegensatz zu dem hier verwendeten optischen Verfahren muss beispielsweise bei mechanischen Tastschnittverfahren in Betracht gezogen werden, dass in Abhängigkeit von der verwendeten Spitzengeometrie nicht alle spitzen Täler erfasst werden können.

In DIN EN ISO 4288 ist die Aufteilung des Primärprofils in einen für die Rauwertsberechnung vernachlässigten Welligkeitsanteil (große Wellenlängen) und in den eigentlichen Rauhigkeitsanteil (kleine Wellenlängen) mittels einer in Abhängigkeit von den erzielten Rauwerten Filtergrenzwellenlänge festgelegt. So ist beispielsweise für einen arithmetischen Mittenrauwert $R_a$ größer 0,02 μm und kleiner oder gleich 2,00 μm eine Grenzwellenlänge $\lambda_c$ von 0,8 mm vorgesehen (mit $l_r = \lambda_c$). Insbesondere für aus der Gasphase abgeschiedene Schichten (PVD) spielen allerdings Unebenheiten dieser Wellenlänge noch keine entscheidende Rolle für die Qualität und Dichtigkeit der Schicht, sondern Unebenheiten mit einer deutlich kleineren Wellenlänge. Deshalb wird in dieser Erfindung neben der Rauhigkeit nach DIN eine sogenannte Mikrorauhigkeit verwendet, der bei sonst gleichen Gesamtmessstrecken eine Grenzwellenlänge von 0,15 mm zugrunde liegt. Dabei erhöht sich die Zahl der Einzelmessstrecken (normalerweise 5) entsprechend, da stets $l_r = \lambda_c$ zu gelten hat. Diese Mikrorauhigkeiten wurden entsprechend mit $R_a^\mu$, $R_q^\mu$ und $R_z^\mu$ gekennzeichnet.

Als weitere charakteristische Parameter zur Beschreibung der Eigenschaften einer gesinterten Schicht kann die mittlere Porengröße und die Sinterkorngröße herangezogen werden. Beide Maßzahlen lassen sich für beliebige, auch offenporöse, Gefüge über das Linienschnittverfahren an rasterelektronenmikroskopischen Aufnahmen von Querschliffen bestimmen. Dazu werden zunächst in den Aufnahmen die einzelnen Phasen (Partikel, Poren) über Kontrastunterschiede, Kornform oder Elementanalyse (z. B. energiedispersive Röntgenspektroskopie, EDX) entsprechend markiert, dann statistisch Geraden eingezeichnet und die Schnittpunkte an den Übergängen zwischen den verschiedenen Phasen markiert. Der Durchschnittswert aller Längen der so entstandenen Streckenabschnitte, welche in einer Phase liegen, gibt die mittlere Schnittlinienlänge für diese Phase wieder (z. B. Poren). Diese mittlere Schnittlinienlänge wird durch Multiplikation mit einem entsprechenden Geometriefaktor in die tatsächliche Korngröße oder Porengröße umgerechnet. Als Geometriefaktor wurde unter Annahme der üblicherweise genutzten Modellvorstellung von Poren um tetrakaidekaedrische Körner nach Referenz [1] der Wert 1,68 benutzt und für die Korngröße der Wert 1,56 [2].

Wird weiterhin in dieser Erfindung von Sinterkorngrößen gesprochen, ist dabei die morphologisch ablesbare Korngröße aus dem Gefüge gemeint. Die Proben wurden vor der Analyse nicht geätzt.

Die maximale Porengröße wurde aus einer Reihe von rasterelektronenmikroskopischen Aufnahmen aus den größten Innendurchmessern aller Poren bestimmt. Der Innendurchmesser einer Pore bezeichnet dabei die Länge der größten geraden Strecke, die innerhalb der Pore verläuft.

Für die zu ermittelnde Poren- und Korngröße ist bei den mikroskopischen Aufnahmen auf eine geeignete Vergrößerung zu achten. Insbesondere muss die zu ermittelnde Poren- oder Korngröße noch aufgelöst werden und gleichzeitig noch vom Bildausschnitt vollständig erfasst werden.

Wie bereits gesagt, erlaubt die Adaptionsschicht ein unmittelbares Aufbringen des Elektrolyts, so dass im Sinne eines vereinfachten, raumsparenden Aufbaus der Brennstoffzelle auf zusätzliche Zwischenschichten zwischen dem Elektrolyt und der Adaptionsschicht verzichtet werden kann.

Vorzugsweise ist die mittlere Porengröße der Adaptionsschicht höchstens halb so groß wie die mittlere Porengröße der Elektrode. Damit ist es auch möglich, einen gasdichten Dünnschichtelektrolyten (< 10 $\mu$m) über PVD-, hierbei insbesondere über Elektronenstrahlverdampfen bzw. Sputter-Prozesse, oder Sol-Gel-Technologien aufzubringen.

Vorzugsweise beträgt die mittlere Porengröße der Poren (zumindest im oberflächennahen Schichtbereich der dem Elektrolyt zugewandten Schichtoberfläche) der Adaptionsschicht höchstens 500 nm. Hierdurch wird ein homogenes Wachstum des Elektrolyt-Materials (z.B. als PVD-Schicht) auf der Adaptionsschicht unterstützt. Bei mittleren Porengrößen oberhalb 500 nm besteht die Gefahr, dass die Poren nicht mehr gasdicht mit einer dünnen Elektrolytschicht verschlossen werden können. Insbesondere beträgt die mittlere Porengröße der Adaptionsschicht (zumindest in ihrem oberflächennahen Schichtbereich der dem Elektrolyt zugewandten Schichtoberfläche) höchstens 350 nm, weiter bevorzugt höchstens 250 nm.

Vorzugsweise weist die Adaptionsschicht als mittlere Oberflächenrauigkeit einen quadratischen Mittenrauwert $R_q$ kleiner 2,5 $\mu$m, vorzugsweise höchstens 1,5 $\mu$m, weiter bevorzugt höchstens 1,0 $\mu$m auf. Ein quadratischer Mittenrauwert $R_q$ oberhalb 2,5 $\mu$m führt zu potentiellen Leckagen in dem nachfolgenden Dünnschichtelektrolyt. So können beispielsweise beim Wachstum einer folgenden PVD-Schicht interkolumnare Zwischenräume entstehen. Bei Sol-Gel-Dünnschichtelektrolyten führen höhere Rauwerte dazu, dass die Benetzung der Profilspitzen nicht mehr gewährleistet werden kann oder die kritische Schichtdicke in den Profiltälern überschritten wird, was zu Rissen im Dünnschichtelektrolyten führt.

Vorzugsweise ist zwischen dem Trägersubstrat und einer Elektrode, insbesondere der Anode, eine Diffusionsbarriere angeordnet. Sie kann metallische Interdiffusionen und andere Reaktionen zwischen Substrat und Elektrode verhindern und trägt somit zur Langzeitstabilität und zu einer höheren Lebensdauer der Anordnung bei.

Vorzugsweise weist die Adaptionsschicht eine Dicke von 3 bis 20 $\mu$m auf. Unterhalb von 3 $\mu$m Schichtdicke kann die Adaptionsschicht die Rauhigkeit der darunterliegenden Elektrodenschicht nicht vollständig ausgleichen, was eine gasdichte Aufbringung eines Dünnschichtelektrolyten mit homogenem Schichtwachstum nicht möglich macht. Oberhalb einer Schichtdicke von 20 $\mu$m würde der ohmsche Widerstand dieses Schichtsystems (Adaptionsschicht und Elektrolyt) in einem Bereich liegen, der keinen signifikanten Leistungsvorteil gegenüber herkömmlichen metallgestützten SOFCs (=Solid Oxid Fuel Cell) mit plasmagespritzten Elektrolyten bieten würde.

Der auf die Adaptionsschicht aufgebrachte Elektrolyt weist vorzugsweise eine Schichtdicke von 0,2 bis 10 $\mu$m auf. Unterhalb einer Schichtdicke von 0,2 $\mu$m ist die erforderliche Gasdichtheit der Elektrolytschicht nicht gewährleistet. Der Anstieg der Schichtdicke des Elektrolyten geht mit einer signifikanten Erhöhung des ohmschen Widerstandes und folglich mit einer verminderten Leistung der Brennstoffzelle einher, so dass eine maximale Schichtdicke von 10 $\mu$m bevorzugt ist.

Die Anordnung mit dem Elektrolyt und der Adaptionsschicht wird vorzugsweise in einer Brennstoffzelle, insbesondere in einer Hochtemperatur-Brennstoffzelle eingesetzt. Zu den Hochtemperatur-Brennstoffzellen zählen oxidkeramische Brennstoffzellen - auch SOFC genannt. Die SOFC ist aufgrund ihres hohen elektrischen Wirkungsgrades und der möglichen Nutzung der bei hohen Betriebstemperaturen anfallenden Abwärme als Brennstoffzelle besonders geeignet.

Als Material für das metallische Substrat ist beispielsweise eine ferritische FeCrMx Legierung als auch eine Legierung auf Chrombasis geeignet. Die FeCrMx Legierung weist neben Eisen regelmäßig Chromgehalte zwischen 16 und 30 Gew.-% und zusätzlich noch wenigstens ein Legierungselement in einem Anteil von 0,01 bis 2 Gew.-% auf, welches aus der Gruppe der Seltenerdenmetalle bzw. deren Oxide, z. B. Y, $Y_2O_3$, Sc, $Sc_2O_3$, oder aus der Gruppe Ti, Al, Mn, Mo oder Co stammt.

Als Beispiele für geeignete ferritische Stähle seien hier genannt Ferrochrom (1.4742), CrAl20 5(1.4767) und CroFer 22 APU von Thyssen Krupp, Fe-CrAlY von Technetics, ZMG 232 von Hitachi Metals, SUS 430 HA und SUS 430 Na von Nippon Steel sowie sämtliche ODS-Eisenbasislegierungen der ITM-Klasse von Plansee, wie z.B. ITM Fe-26Cr-(Mo, Ti, $Y_2O_3$)

Alternativ kann als poröses metallisches Substrat auch eine Legierung auf Chrombasis, das bedeutet mit einem Chromgehalt von mehr als 65 Gew.-%, beispielsweise Cr5FeIY bzw. $Cr5FeIY_2O_3$, eingesetzt werden.

Auf das bereitgestellte metallische poröse Substrat werden einzelne Schichten der Brennstoffzelle aufgebracht. Vorzugsweise werden nacheinander folgende Funktionen bzw. Schichten aufgebracht:

1) optional eine Diffusionsbarriereschicht (zum Verhindern von metallischer Interdiffusion zwischen Substrat und Elektrode, insbesondere bei Anoden),
2) eine erste Elektrode (Anode oder Kathode),
3) ein Elektrolyt,
4) optional eine Diffusionsbarriereschicht zur Verhinderung von Reaktionen zwischen Elektrolyt und Elektrode, insbesondere bei Hochleistungskathoden aus LSCF (Lanthan-Strontium-Cobalt-Ferrit),
5) eine zweite Elektrode (Kathode oder Anode).

Die Diffusionsbarriereschicht besteht beispielsweise aus Lanthan-Strontium-Manganit (LSM), Lanthan-Strontium-Chromit (LSCR) oder Gadoliniumoxid-dotiertem Ceroxid (CGO). Die Anode kann als mehrschichtiger Schichtverbund oder als einzelne Schicht aufgebaut sein. Gleiches gilt prinzipiell für die Kathode. Zunächst ist eine erste Elektrode auf das Substrat aufgebracht, z.B. mittels eines nasschemischen Verfahrens.

Auf die Elektrode wird, wie bereits erläutert, eine poröse Adaptionsschicht aufgebracht. Auf die Adaptionsschicht kann der Elektrolyt mit geringem Verfahrensaufwand gasdicht aufgebracht werden, da die mittlere Porengröße der Adaptionsschicht kleiner ist als die mittlere Porengröße der Elektrode.

Vorteilhaft wird eine geeignete Schichtdicke der Adaptionsschicht erreicht, indem sie nasschemisch auf die Elektrode aufgebracht wird. Dies kann beispielsweise mittels Siebdruck, Tauchbeschichtung oder Schlickerguss erfolgen.

Optional kann die Adaptionsschicht auch mehrlagig aufgebracht werden. In diesem Fall wird das Material der Adaptionsschicht in mehreren Verfahrensschritten wiederholt aufgebracht. Beispielsweise wird die Elektrode wiederholt tauchbeschichtet und zwischen einzelnen Beschichtungsvorgängen getrocknet. Das mehrlagige Aufbringen unterstützt eine homogen aufgebaute Adaptionsschicht. Unregelmäßige Oberflächenverläufe der Adaptionsschicht werden vermieden. Dies wiederum schafft vorteilhafte physikalische Bedingungen für das Aufbringen des Elektrolyt-Materials auf die Adaptionsschicht.

In einer bevorzugten Ausführungsform besteht die Adaptionsschicht aus einem reinen Ionen leitenden, also aus einem Elektronen nichtleitenden Material. Somit ist die erforderliche elektrische Isolation zwischen den beiden Elektroden (Anode und Kathode) bereits durch die Adaptionsschicht gewährleistet. Weitere elektronische Isolationsschichten können entfallen, so dass sich der Aufbau der Brennstoffzelle vereinfacht. Der gasdichte Elektrolyt kann deshalb auch aus einer Schicht bestehen, die - z.B. bei Betriebsbedingungen der Brennstoffzelle - eine signifikante elektronische Leitfähigkeit aufweist. Dies ist z.B. bei einem Elektrolyt aus Gadoliniumoxid-dotiertem Ceroxid (CGO) bei höheren Temperaturen (> 650°C) der Fall.

Als Material für die Elektronen nichtleitende Adaptionsschicht kommt dotiertes Zirkoniumoxid zur Anwendung. Als Dotierung ist mindestens ein Oxid der Dotierungselemente aus der Gruppe Y, Sc, Al, Sr, Ca geeignet. So kann die Adaptionsschicht als YSZ-Schicht (Yttriumoxid-stabilisiertes Zirkoniumdioxid) ausgebildet sein.

Alternativ wird für die Adaptionsschicht ein Ionen und Elektronen leitendes Material (Mischleiter) eingesetzt. Besonders geeignet hierfür ist dotiertes Ceroxid. Als Dotierung ist vorteilhaft mindestens ein Oxid der Dotierungselemente aus der Gruppe Seltenerdelemente wie Gd, Sm und/oder aus der Gruppe Y, Sc, Al, Sr, Ca vorgesehen. So kann die Adaptionsschicht als CGO-Schicht ausgebildet sein. In diesem Fall sollte die elektrische Isolation zwischen den beiden Elektroden von der gasdichten Elektrolytschicht übernommen werden. Als Material für den Elektronen nichtleitenden Dünnschichtelektrolyt kommt hierbei bevorzugt eine Oxidkeramik, z.B. dotiertes Zirkoniumoxid zur Anwendung. Als Dotierung ist mindestens ein Oxid der Dotierungselemente aus der Gruppe Y, Sc, Al, Sr, Ca geeignet. So kann der Dünnschichtelektrolyt als YSZ-Schicht (Yttriumoxid-stabilisiertes Zirkoniumdioxid) ausgebildet sein.

Die vorgenannten Materialien für die Adaptionsschicht können je nach Anwendungsfall auch für den Elektrolyt verwendet werden. So können im Falle eines Elektrolyt aus CGO-Material auch Kathoden unmittelbar auf diesen Elektrolyt aufgebracht werden, die als eine mit $ZrO_2$ reagierende Sr-Komponente ausgebildet sind, z.B. Lanthan-Strontium-Cobalt-Ferrit (LSCF) oder Lanthan-Strontium-Kobaltit (LSC).

Die an der Elektrode aufgebrachte Adaptionsschicht wird vorzugsweise gesintert. Die Sintertemperatur beträgt insbesondere 950°C bis 1300°C, so dass während des Betriebes der Brennstoffzelle (z.B. SOFC, bis 850°C) keine unerwünschten Strukturänderungen mehr in der Adaptionsschicht zu erwarten sind. Um eine ausreichende mechanische Stabilität zu erreichen, wird für die Adaptionsschicht bevorzugt ein Pulver mit einer mittleren Korngröße von 30 bis 500 nm, insbesondere 150 nm, eingesetzt. Hierdurch wird außerdem eine zu starke Infiltration in eine poröse Elektrodenschicht (z.B. Anodenschicht) vermieden.

Die Adaptionsschicht bietet die Möglichkeit, eine stabile und gasdichte Elektrolyt-Schichtstruktur mittels Gasphasenabscheidung herzustellen. Dieses Verfahren erlaubt auch besonders dünne Elektrolytschichten. Beispielsweise kann auf die Adaptionsschicht ein Elektrolyt mit einer Schichtdicke von 0,2 bis 10 μm, vorzugsweise 1 bis 3 μm, weiter bevorzugt 1 bis 2 μm, abgeschieden werden. Besonders geeignet ist hierfür das PVD-Verfahren (physical vapour deposition).

Alternativ kann der Elektrolyt mittels Sol-Gel-Technologie aufgebracht werden.

Im Folgenden wird die Erfindung an Hand einiger Figuren und eines konkreten Ausführungsbeispiels näher erläutert.

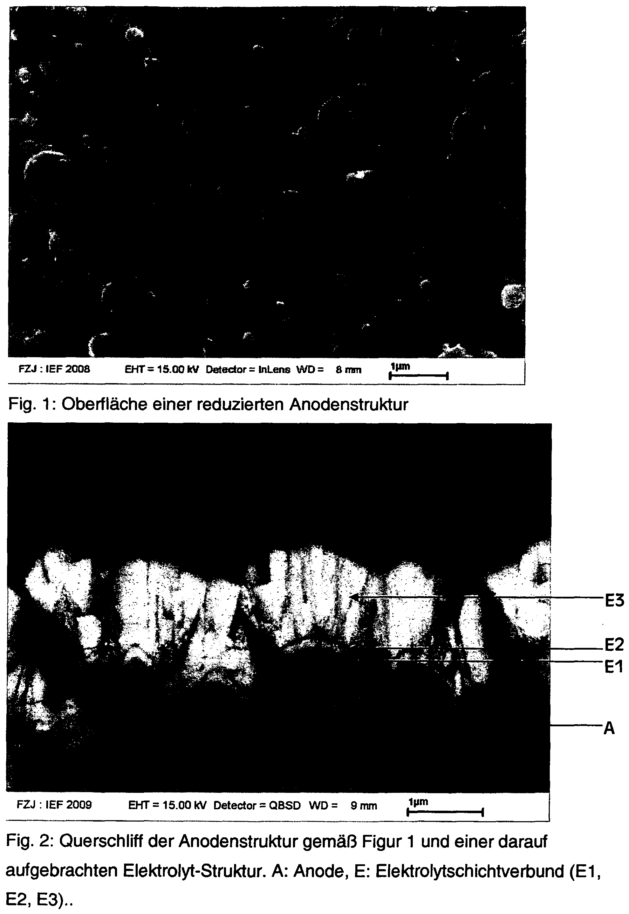

Die Figur 1 zeigt die Oberfläche einer reduzierten Anodenstruktur (Ni/8YSZ), die auf ein hier nicht dargestelltes poröses metallisches Substrat (ITM) aufgebracht ist. Die Geometrie/Dimensionierung der Poren an der Anodenstruktur ist verhältnismäßig groß.

Figur 2 zeigt einen Querschliff der mit einem Elektrolyt beschichteten Anodenstruktur gemäß Figur 1. Der mehrschichtige Elektrolyt wurde mittels PVD-Beschichtung auf die Anodenstruktur aufgebracht und besteht aus einer CGO-Schicht (E1), einer 8YSZ-Schicht (E2) und einer weiteren CGO-Schicht (E3). Deutlich erkennbar ist das kolumnare Schichtwachstum des Elektrolyten mit einem gefächerten, unregelmäßigen Wachstum. Das inhomogene Wachstum der Elektrolytschichten insbesondere auf den Ni-Partikeln verhindert den erforderlichen gasdichten Schichtaufbau des Elektrolyts.

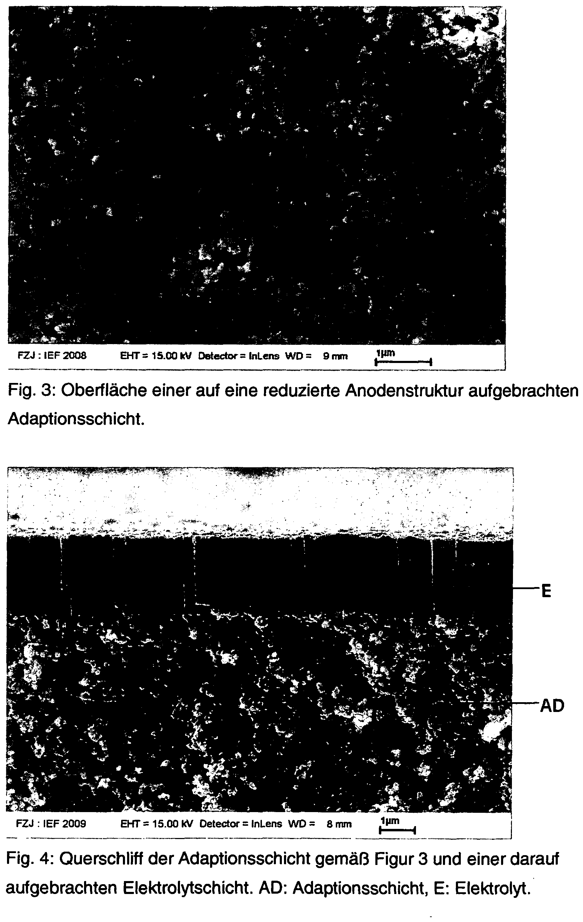

Die Figur 3 zeigt die Oberflächenstruktur der auf eine Anodenstruktur aufgebrachten Adaptionsschicht. Deutlich erkennbar ist die im Vergleich zur Anodenstruktur gemäß Figur 1 erheblich verkleinerte Porengröße der Poren der Adaptionsschicht.

Die Figur 4 zeigt einen Querschliff der Adaptionsschicht gemäß Figur 3 und eines darauf aufgebrachten Elektrolyt. Der Elektrolyt ist als eine einzige Schicht aus CGO ausgebildet und wurde mittels PVD-Verfahren aufgebracht. Das Wachstum der Elektrolyt-Schicht ist ungestört und homogen, so dass die erforderliche Gasdichtheit des Elektrolyts erreicht wird.

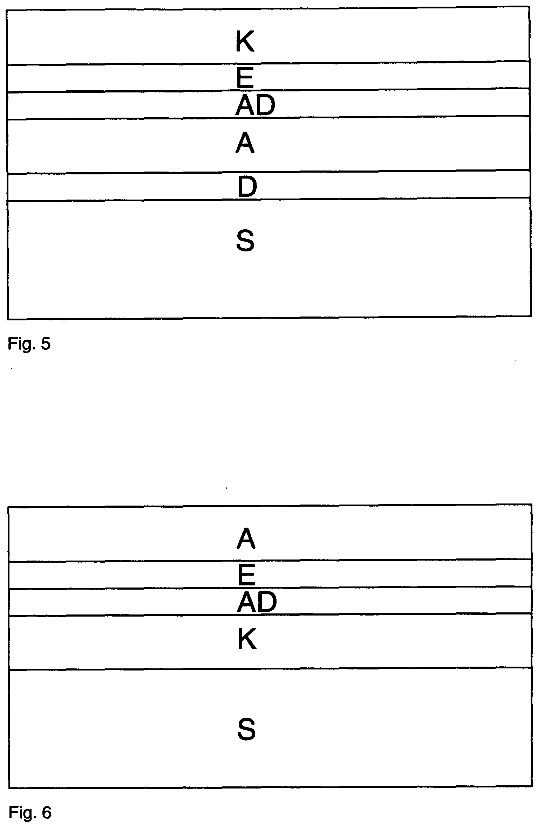

Beispiele für den Aufbau der erfindungsgemäßen Anordnung bzw. der Brennstoffzelle sind den Figuren 5 und 6 schematisch entnehmbar.

Gemäß Fig. 5 (Variante A) ist auf ein metallisches poröses Substrat S (ITM), das mit einer Diffusionsbarriere D versehen ist, eine poröse Anodenstruktur A aufgebracht. Auf diese Anodenstruktur sind nacheinander folgende Schichten aufgebracht: eine poröse Adaptionsschicht AD, eine gasdichte Elektrolytschicht E, eine poröse Kathode K. Bei diesem Aufbau werden beispielsweise folgende Materialien verwendet:

S:      FeCr-Legierung oder CFY-Legierung.
D:      Diffusionsbarriere aus LSM oder CGO.
A:      Ni/8YSZ (Cermetgemisch aus Nickel und einem mit 8 Mol-% Yttriumoxid stabilisiertem Zirkondioxid) oder NiO/8YSZ (Gemisch aus Nickeloxid und einem mit 8 Mol-% Yttriumoxid stabilisiertem Zirkondioxid).
AD:      YSZ (Yttriumoxid-stabilisiertes Zirkoniumdioxid) oder ScSZ (Scandiumoxid-stabilisiertes Zirkoniumdioxid).
E:      CGO.
K:      LSCF oder LSM oder LSC.

Gemäß Fig. 6 (Variante B) ist auf ein metallisches poröses Substrat S (ITM) eine poröse Kathode K aufgebracht. Auf diese Kathode K sind nacheinander folgende Schichten aufgebracht: eine poröse Adaptionsschicht AD, eine gasdichte Elektrolytschicht E, eine poröse Anode A. Bei diesem Aufbau werden beispielsweise folgende Materialien verwendet:

S:      FeCr-Legierung oder CFY-Legierung.
K:      LSM oder LSCF oder LSC.
AD:      CGO.
E:      YSZ oder ScSZ.
A:      Ni/8YSZ oder NiO/8YSZ.

Das Aufbringen eines gasdichten Dünnschichtelektrolyt stellt gewisse Anforderungen an die darunter liegende Schichtstruktur bezüglich Rauhigkeit und/oder Porengröße, die durch eine Adaptionsschicht erfüllt werden können. Werden pulvermetallurgische poröse Substrate (z.B. mit einer Korngröße von < 125 μm) mit einer Anodenstruktur beschichtet, so kann letztere eine mittlere Porengröße bis zu 1,5 μm aufweisen (siehe Figur 1). Die Rauhigkeit der Oberfläche dieser Anodenstruktur sollte für den quadratischen Mittenrauwert $R_q$ kleiner als 3 μm, vorzugsweise kleiner als 2 μm, für den quadratischen Mikromittenrauheitswert $R_q^{\mu}$ kleiner als 1 μm, vorzugsweise kleiner als 0,6 μm, und für die mittlere Rautiefe $R_z$ kleiner 10 μm, vorzugsweise kleiner 6 μm, sowie für die mittlere Mikrorautiefe $R_z^{\mu}$ kleiner 4 μm, vorzugsweise kleiner 2 μm betragen.

Zur Ermittlung der Rauhigkeiten wurde der Lasertopograph CT200 (Cybertechnolgies GmbH, Ingolstadt) mit einem konfokalen Lasersensor LT9010 verwendet (Messfleckgröße ca. 2μm, vertikale Auflösung 10nm). Die in 1um Schrittweite vermessenen Primärprofile wurden vor der Anwendung der DIN-Vorschriften mit einem Gaussfilter, α=ln(2), Filterlänge 5μm, gefiltert, um einzelne Fehlsignale aufgrund von Mehrfachreflexen zu minimieren.

Für die über das Linienschnittverfahren ermittelten Korn- und Porengrößen des gesinterten Gefüges wurden für jede Kenngröße jeweils mindestens drei rasterelektronenmikroskopische Aufnahmen von Querschliffen der Schichten ausgewertet. Dabei wurden 500 - 1000 Linien pro Aufnahme eingezeichnet. Bei einer Pixelanzahl der rasterelektronischen Aufnahmen von 1024x768 Pixeln wurde für die Adaptionsschicht ein Gesamtausschnitt der Breite von 5 bis 15 μm gewählt.

Für die Adaptionsschicht wurde ein 8YSZ-Pulver einer mittleren dispergierbaren Primärpartikelgröße von 150 nm und einer spezifischen Oberfläche von 13 m$^2$/g eingesetzt (TZ-8Y, Tosoh Corp., Japan). Eine Tauchsuspension wurde mit Mahlkugeln der Durchmesser 5 und 10 mm versetzt und auf einer Rollenbank 48 Stunden homogenisiert, bestehend aus 67,2 Gew.-% Lösungsmittel DBE (Dibasische Ester, Lemro Chemieprodukte Michael Mrozyk KG, Grevenbroich), 30,5 Gew.-% 8YSZ-Pulver (TZ-8Y) und 2,3 Gew.-% Ethylcellulose als Bindemittel (Fluka, 3-5,5 mPa s, Sigma-Aldrich Chemie GmbH, München). Die Trägersubstrate mit daran aufgebrachter Anodenstruktur wurden vertikal in die Suspension eingetaucht und nach einem Trocknungsschritt in H$_2$-Atmosphäre bei 1200°C für 3 Stunden gesintert. Je nach Beschichtungsparameter (Tauchgeschwindigkeit, Abtropfzeit) ergab sich eine Adaptionsschichtdicke von 10 bis 20 μm. Die so aufgebrachte Adaptionsschicht zeigte einen quadratischen Mittenrauwert R$_q$ von 1,2 μm und eine mittlere Rautiefe R$_z$ von 5,8 μm. Der quadratische Mikromittenrauheitswert $R_q^\mu$ zeigte einen Wert von 0,21 μm und die gemittelte Mikrorautiefe $R_z^\mu$ zeigte einen Wert von 0,67 μm. Neben dieser leichten Absenkung der Rauhigkeitswerte zeigte sich eine deutliche Verringerung der mittleren Porengröße an der Oberfläche der Adaptionsschicht. Während die Oberfläche der Anodenstruktur eine mittlere Porengröße von ca. 610 nm, aufwies (siehe Figur 1), betrug die mittlere Porengröße der Adaptionsschicht in diesem Fall ca. 240 nm (siehe Figur 3). Auf der Adaptionsschicht konnte eine dichte Elektrolyt-Schicht aus Gd$_2$O$_3$-dotiertem CeO$_2$ (CGO) mittels Gasphasenabscheidung (Elektronenstrahlverdampfung bei 870°C, EB-PVD) mit einer Schichtdicke von ca. 1,7 μm aufgebracht werden. Die Gasdichtheit dieses Elektrolyt wurde mittels He-Lecktest zu 3,4 x 10$^{-3}$ (hPa dm$^3$) / (s cm$^2$) für eine Druckdifferenz von 1000 hPa ermittelt. Dieser Wert entspricht gängigen anodengestützten Brennstoffzellen im reduzierten Zustand.

In der Anmeldung zitierte Literatur:

[1] T.S. Smith: "Morphological Characterization of Porous Coatings." In: "Quantitative Characterization and Performance of Porous Implants for Hard Tissue Applications", ASTM STP953, J.E. Lemmons, Hrsg., American Society for Testing and Materials, Philadelphia, 1987, S. 92-102.

[2] M.I. Mendelson: "Average Grain Size in Polycrystalline Ceramics", J. Am. Ceram. Soc. 52 [8] (1969), 443-446.

**Patentansprüche**

1. Anordnung für eine Brennstoffzelle, mit

   - wenigstens einer Elektrode (A, K), die in reduzierter Form vorliegt,
   - einem Elektrolyt (E),
   - einem metallischen porösen Trägersubstrat (8) als Träger für die Elektrode (A, K) und den Elektrolyt,
   - einer zwischen der reduziert vorliegenden Elektrode und dem Elektrolyt angeordneten Adaptionsschicht (AD) zur Adaption des Elektrolyts (E) an diese Elektrode (A, K), **dadurch gekennzeichnet,**
   - **dass** die Adaptionsschicht (AD) eine mittlere Porengröße aufweist, die kleiner ist als die mittlere Porengröße der reduziert vorliegenden Elektrode (A, K), und
   - mit einer Adaptionsschicht (AD) aus dotiertem Zirkoniumdioxid, wobei die Dotierung mindestens ein Oxid der Dotierungselemente aus der Gruppe Y, Sc, Al, Sr, Ca enthält, oder
   - mit einer Adaptionsschicht (AD) aus dotiertem Ceroxid, wobei die Dotierung mindestens ein Oxid der Dotierungselemente aus der Gruppe der Selten-Erd-Elemente und/oder aus der Gruppe Y, Sc, Al, Sr, Ca enthält
   - wobei der Elektrolyt ein gasdichter Dünnschichtelektrolyt ist, dessen Schichtdicke maximal 10 μm aufweist.

2. Anordnung nach Anspruch 1, **dadurch gekennzeichnet, dass** die mittlere Porengröße der Adaptionsschicht (AD) höchstens halb so groß ist wie die mittlere Porengröße der Elektrode (A, K).

3. Anordnung nach Anspruch 1 oder 2, **dadurch gekennzeichnet, dass** die mittlere Porengröße der Adaptionsschicht (AD) höchstens 500 nm, vorzugsweise höchstens 350 nm, beträgt.

4. Anordnung nach einem der vorhergehenden Ansprüche, **dadurch gekennzeichnet, dass** die Adaptionsschicht (AD) eine mittlere Oberflächenrauigkeit R$_q$ kleiner 2,5 μm, vorzugsweise höchstens 1,5 μm, weiter bevorzugt höchstens 1,0 μm, aufweist.

5. Anordnung nach einem der vorhergehenden Ansprüche, **dadurch gekennzeichnet, dass** die Elektrode als Anode (A) ausgebildet ist.

6. Anordnung nach einem der vorhergehenden Ansprüche, **dadurch gekennzeichnet, dass** der Elektrolyt (E) an der dem Elektrolyt (E) zugewandten Schichtoberfläche der Adaptionsschicht (AD) unmittelbar angeordnet ist.

**7.** Anordnung nach einem der vorhergehenden Ansprüche, **dadurch gekennzeichnet, dass** die Adaptionsschicht (AD) eine Dicke von 3 bis 20 $\mu$m, vorzugsweise 3 bis 7 $\mu$m, aufweist.

**8.** Anordnung nach einem der vorhergehenden Ansprüche, **dadurch gekennzeichnet, dass** der Elektrolyt (E) eine Dicke von 0,2 bis 10 $\mu$m, vorzugsweise 1 bis 3 $\mu$m, aufweist.

**9.** Anordnung nach einem der vorhergehenden Ansprüche, **gekennzeichnet durch** einen Elektrolyt (E) aus einem Elektronen nichtleitenden Material.

**10.** Anordnung nach Anspruch 9, **gekennzeichnet durch** einen Elektrolyt (E) aus dotiertem Zirkoniumdioxid, wobei die Dotierung mindestens ein Oxid der Dotierungselemente aus der Gruppe Y, Sc, Al, Sr, Ca enthält.

**11.** Anordnung nach einem der vorhergehenden Ansprüche 1 bis 8, **gekennzeichnet durch** einen Elektrolyt (E) aus einem Ionen und Elektronen leitenden Material.

**12.** Anordnung nach Anspruch 11, **gekennzeichnet durch** einen Elektrolyt (E) aus dotiertem Ceroxid, wobei die Dotierung mindestens ein Oxid der Dotierungselemente aus der Gruppe der Selten-Erd-Elemente wie Gd, Sm und/oder aus der Gruppe Y, Sc, Al, Sr, Ca enthält.

**13.** Verfahren zur Herstellung einer Anordnung für eine Brennstoffzelle gemäß einem der Ansprüche 1-12, mit einer Elektrode (A, K) und einem Elektrolyt (E), **gekennzeichnet durch** folgende Verfahrensschritte:

a) Bereitstellen eines metallischen porösen Trägersubstrats (8) als Träger für die Elektrode (A, K) und den Elektrolyt (E),
b) Aufbringen der Elektrode (A, K) auf das Trägersubstrat (8),
c) Sinterung der auf das Trägersubstrat (8) aufgebrachten Elektrodenstruktur (A, K) in reduzierter Atmosphäre,
d) Aufbringen einer porösen Adaptionsschicht (AD) auf die Elektrode (A, K) zur Adaption des Elektrolyt (E) an diese Elektrode (A, K), wobei die mittlere Porengröße der Adaptionsschicht (AD) kleiner ist als die mittlere Porengröße dieser Elektrode (A, K) und
e) Aufbringen des Elektrolyts (E) auf die Adaptionsschicht (AD).

**Claims**

**1.** An arrangement for a fuel cell, having

- at least one electrode (A, K), present in reduced form
- an electrolyte (E),
- a metallic porous carrier substrate (8) as a carrier for the electrode (A, K) and the electrolyte,
- an adaptation layer (AD) arranged between the reduced electrode present and the electrolyte for adapting the electrolyte (E) to this electrode (A, K),
**characterised in that**
- the adaptation layer (AD) has an average pore size which is smaller than the average pore size of the reduced electrode present (A, K), and
- having an adaptation layer (AD) made from doped zirconium oxide, wherein the doping contains at least one oxide of the doping elements from the group Y, Sc, Al, Sr, Ca, or
- having an adaptation layer (AD) made from doped cerium oxide, wherein the doping contains at least one oxide of the doping elements from the group of the rare earth elements and/or from the group Y, Sc, Al, Sr, Ca
- wherein the electrolyte is a gastight thin layer electrolyte with a maximum layer thickness of 10 $\mu$m.

**2.** The arrangement according to claim 1, **characterised in that** the average pore size of the adaptation layer (AD) is at most half as large as the average pore size of the electrode (A, K).

**3.** The arrangement according to claim 1 or 2, **characterised in that** the average pore size of the adaptation layer (AD) is at most 500 nm, preferably at most 350 nm.

**4.** The arrangement according to one of the preceding claims, **characterised in that** the adaptation layer (AD) has an average surface roughness $R_q$ smaller than 2.5 $\mu$m, preferably at most 1.5 $\mu$m, more preferably at most 1.0 $\mu$m.

**5.** The arrangement according to one of the preceding claims, **characterised in that** the electrode is designed as an anode (A).

**6.** The arrangement according to one of the preceding claims, **characterised in that** the electrolyte (E) is directly arranged on the layer surface of the adaptation layer (AD), the layer surface facing towards the electrolyte (E).

**7.** The arrangement according to one of the preceding claims, **characterised in that** the adaptation layer (AD) has a thickness from 3 to 20 $\mu$m, preferably from 3 to 7 $\mu$m.

8.  The arrangement according to one of the preceding claims, **characterised in that** the electrolyte (E) has a thickness from 0.2 to 10 $\mu$m, preferably from 1 to 3 $\mu$m.

9.  The arrangement according to one of the preceding claims, **characterised by** an electrolyte (E) made from a material that is non-conductive for electrons.

10. The arrangement according to claim 9, **characterised by** an electrolyte (E) made from doped zirconium oxide, wherein the doping contains at least one oxide of the doping elements from the group Y, Sc, Al, Sr, Ca.

11. The arrangement according to one of the preceding claims 1 to 8, **characterised by** an electrolyte (E) made from a material that is conductive for ions and electrons.

12. The arrangement according to claim 11, **characterised by** an electrolyte (E) made from doped cerium oxide, wherein the doping contains at least one oxide of the doping elements from the group of the rare earth elements such as Gd, Sm, and/or from the group Y, Sc, Al, Sr, Ca.

13. A method for producing an arrangement for a fuel cell according to one of claims 1-12, having an electrode (A, K) and an electrolyte (E), **characterised by** the following method steps:

    a) provision of a metallic, porous carrier substrate (8) as a carrier for the electrode (A, K) and the electrolyte (E),
    b) application of the electrode (A, K) to the carrier substrate (8),
    c) sintering of the electrode structure (A, K) applied to the carrier substrate (8) in a reduced atmosphere,
    d) application of a porous adaptation layer (AD) to the electrode (A, K) for adapting the electrolyte (E) to this electrode (A, K), wherein the average pore size of the adaptation layer (AD) is smaller than the average pore size of this electrode (A, K), and
    e) application of the electrolyte (E) to the adaptation layer (AD).

**Revendications**

1.  Agencement d'une pile à combustible, comprenant

- au moins une électrode (A, K), qui se présente sous forme réduite,
- un électrolyte (E),
- un substrat (8) support poreux métallique comme support de l'électrode (A, K) et de l'électrolyte,
- une couche (AD) d'adaptation, qui est disposée entre l'électrode se présentant sous forme réduite et l'électrolyte, pour l'adaptation de l'électrolyte (E) à cette électrode (A, K),
**caractérisé**
- **en ce que** la couche (AD) d'adaptation a une dimension de pore moyenne, qui est plus petite que la dimension de pore moyenne de l'électrode (A, K) se présentant sous forme réduite, et
- comprenant une couche (AD) d'adaptation en dioxyde de zirconium dopé, le dopage contenant au moins un oxyde des éléments de dopage choisis dans le groupe Y, Sc, Al, Sr, Ca, ou
- comprenant une couche (AD) d'adaptation en oxyde de cérium dopé, le dopage contenant au moins un oxyde des éléments de dopage choisis dans le groupe des éléments de terre rare et/ou dans le groupe Y, Sc, Al, Sr, Ca,
- dans lequel l'électrolyte est un électrolyte à couche mince étanche au gaz, dont l'épaisseur de couche est au maximum de 10 $\mu$m.

2.  Agencement suivant la revendication 1, **caractérisé en ce que** la dimension de pore moyenne de la couche (AD) d'adaptation est au plus à moitié aussi grande que la dimension de pore moyenne de l'électrode (A, K)

3.  Agencement suivant la revendication 1 ou 2, **caractérisé en ce que** la dimension de pore moyenne de la couche (AD) d'adaptation est au plus de 500 nm, de préférence au plus de 350 nm.

4.  Agencement suivant l'une des revendications précédentes, **caractérisé en ce que** la couche (AD) d'adaptation a une rugosité $R_q$ de surface moyenne plus petite que 2,5 $\mu$m, de préférence d'au plus 1,5 $\mu$m, d'une manière encore plus préférée d'au plus 1,0 $\mu$m.

5.  Agencement suivant l'une des revendications précédentes, **caractérisé en ce que** l'électrode est constituée en anode (A) .

6.  Agencement suivant l'une des revendications précédentes, **caractérisé en ce que** l'électrolyte (E) est disposé directement sur la surface, tournée vers l'électrolyte (E), de la couche (AD) d'adaptation.

7.  Agencement suivant l'une des revendications précédentes, **caractérisé en ce que** la couche (AD) d'adaptation a une épaisseur de 3 à 20 μm, de préférence de 3 à 7 μm.

8. Agencement suivant l'une des revendications précédentes, **caractérisé en ce que** l'électrolyte (E) a une épaisseur de 0,2 à 10 μm, de préférence de 1 à 3 μm.

9. Agencement suivant l'une des revendications précédentes, **caractérisé par** un électrolyte (E) en une matière ne conduisant pas des électrons.

10. Agencement suivant la revendication 9, **caractérisé par** un électrolyte (E) en dioxyde de zirconium dopé, le dopage contenant au moins un oxyde des éléments de dopage choisis dans le groupe Y, Sc, Al, Sr, Ca.

11. Agencement suivant l'une des revendications précédentes 1 à 8, **caractérisé par** un électrolyte (E) en une matière conduisant les électrons.

12. Agencement suivant la revendication 11, **caractérisé par** un électrolyte (E) en oxyde de cérium dopé, le dopage contenant au moins un oxyde des éléments de dopage choisis dans le groupe des éléments de terre rare comme Gd, Sm et/ou choisis dans le groupe Y, Sc, Al, Sr, Ca.

13. Procédé de production d'un agencement d'une pile à combustible suivant l'une des revendications 1 à 12, comprenant une électrode (A; K) et un électrolyte (E), **caractérisé par** les stades de procédé suivant :

   a) on se procure un substrat (8) de support poreux métallique comme support de l'électrode (A, K) et de l'électrolyte (E),
   b) on dépose l'électrode (A, K) sur le substrat (8) de support,
   c) on fritte la structure (A, K) d'électrode déposée sur le substrat (8) de support dans une atmosphère réductrice,
   d) on dépose une couche (AD) d'adaptation poreuse sur l'électrode (A, K) pour adapter l'électrolyte (E) à cet électrode (A, K), la dimension de pore moyenne de la couche (AD) d'adaptation étant plus petite que la dimension de pore moyenne de cette électrode (A, K) et
   e) on dépose l'électrolyte (E) sur la couche (AD) d'adaptation.

FZJ : IEF 2008    EHT = 15.00 kV  Detector = InLens  WD =  8 mm   1µm

Fig. 1: Oberfläche einer reduzierten Anodenstruktur

FZJ : IEF 2009    EHT = 15.00 kV  Detector = QBSD  WD =  9 mm   1µm

Fig. 2: Querschliff der Anodenstruktur gemäß Figur 1 und einer darauf aufgebrachten Elektrolyt-Struktur. A: Anode, E: Elektrolytschichtverbund (E1, E2, E3)..

FZJ : IEF 2008    EHT = 15.00 kV  Detector = InLens  WD =   9 mm    1µm

Fig. 3: Oberfläche einer auf eine reduzierte Anodenstruktur aufgebrachten Adaptionsschicht.

FZJ : IEF 2009    EHT = 15.00 kV  Detector = InLens  WD =   8 mm    1µm

E

AD

Fig. 4: Querschliff der Adaptionsschicht gemäß Figur 3 und einer darauf aufgebrachten Elektrolytschicht. AD: Adaptionsschicht, E: Elektrolyt.

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10343652 A1
- DE 102007015358 A1
- DE 19626342 A1


**In der Beschreibung aufgeführte Nicht-Patentliteratur**

- Morphological Characterization of Porous Coatings. **T.S. SMITH.** Quantitative Characterization and Performance of Porous Implants for Hard Tissue Applications'', ASTM STP953. American Society for Testing and Materials, 1987, 92-102
- **M.I. MENDELSON.** Average Grain Size in Polycrystalline Ceramics. *J. Am. Ceram. Soc.,* 1969, vol. 52 (8), 443-446